# EUROPEAN PATENT APPLICATION

(11) **EP 2 008 755 A1**
(43) Date of publication of application: **31.12.2008**
(21) Application number: 06834131.2
(22) Date of filing: 06.12.2006
(51) Int. Cl.: B23K 26/20, B23K 26/00, B23K 31/00

(54) **METHOD FOR FORMING LASER WELDING PORTION**

(30) Priority: 24.03.2006 JP 2006083663
(71) Applicant: TOKYU CAR CORPORATION, Yokohama-shi Kanagawa 236-0043 (JP)
(72) Inventor: KAWADA, Naoki, Yokohama-shi Kanagawa; 236-0043 (JP); IWAKI, Shunichi, Yokohama-shi Kanagawa; 236-0043 (JP); GENCHI, Kazuo, Yokohama-shi Kanagawa;236-0043 (JP); OTSUKA, Yosuke, Yokohama-shi Kanagawa; 236-0043 (JP)
(74) Representative: Grünecker, Kinkeldey, Stockmair & Schwanhäusser Anwaltssozietät
(86) International application number: PCT/JP2006/324376
(87) International publication number: WO 2007/111005

(57) **Abstract**

To provide a method for forming a laser weld whereby factors causing deterioration of welding quality can be easily specified.

With the method for forming a laser weld, variations in physical quantities of the output state of laser beam and state of environment during welding are detected in an in-welding step with an output state detection sensor group 204 and a welding environment detection sensor group 205. Then, waveform patterns of the output signals outputted from the sensor groups 204, 205 are monitored, and it is determined whether or not an fault is present in the entire laser welding system 1 including a laser device 51, a work feed device 52, and an assist gas supply device, based on whether or not the waveform pattern exceeds a threshold that has been set in advance. As a result, factors causing deterioration of welding quality can be easily specified even when problems such as decrease in yield and deterioration of parts of equipment with time have occurred.

## Description

### Technical Field

The present invention relates to a method for forming a laser weld for welding a first workpiece and a second workpiece by irradiation with a laser beam.

### Background Art

For example, a quality inspection method for laser welding that is described in Patent Document 1 represents technology relating to this filed. With such conventional quality inspection method for laser welding, light emission of plasma - plume occurring on the work surface during welding is detected and welding quality is determined based on intensity of signals in a predetermined frequency band from among the detected signals. Further, for example, with a laser processing inspection method described in Patent Document 2, sound generated from the laser welding portion is detected and welding quality of the work is determined based on the amplitude value of the detected signal.
[Patent Document 1] Japanese Patent Application Laid-open No. 2003-103387.
[Patent Document 2] Japanese Patent Application Laid-open No. 58-9783.

### Disclosure of the Invention

### Problem to be Solved by the Invention

With all the above-descried conventional methods, welding quality of the work is determined upon completion of laser welding based on detected signals that are based on physical quantities acquired during laser welding. Therefore, defects of individual works can be distinguished, but when problems such as decrease in yield or deterioration of parts of equipment with time occur, factors degrading the welding quality are difficult to specify.

The present invention is created to resolve the above-described problems and it is an object of the present invention to provide a method for forming a laser weld in which factors degrading the welding quality can be easily specified.

### Means for Solving the Problem

In order to resolve the aforementioned problems, the method for forming a laser weld in accordance with the present invention is a method for forming a laser weld, including a pre-welding step of bringing welding scheduled regions of a first workpiece and a second workpiece into contact with each other, an in-welding step of irradiating a laser beam along the welding scheduled regions, and an after-welding step of inspecting welding quality of a weld formed in the welding scheduled regions, wherein the in-welding step includes the steps of: detecting variations in physical quantities of an output state of the laser beam during irradiation in the welding scheduled regions and a state of environment during welding with output state detection means and welding environment detection means; and determining that the output state of the laser beam and the state of environment during welding are faulty based on output signals from the output state detection means and welding environment detection means.

With this method for forming a laser weld, in the in-welding step, output signals corresponding to variations in physical quantities of the output state of the laser beam and state of environment during welding are monitored, and it is determined whether there is an fault in the entire welding system including various devices, for example, a laser irradiation apparatus, a work feed device, and an assist gas supply device. As a result, factors degrading the welding quality can be easily specified even when problems such as decrease in yield or deterioration of parts of equipment with time have occurred. Examples of physical quantities relating to the output state include laser output intensity, light intensity of plasma-plume, intensity of reflected light of laser from the surface of the workpiece, and processing point temperature. Examples of physical quantities relating to the state of environment include sound and vibrations during welding.

The method preferably further includes the steps of: detecting variations in physical quantities of a supply state of a gas supplied into the welding scheduled regions with gas supply state detection means; and determining that the supply state of the gas is faulty based on an output signal from the gas supply state detection means. In this case, factors degrading the welding quality can be specified even easier by monitoring the gas supply state.

The method preferably further includes the steps of: detecting variations in physical quantities of a supply state of power supplied during welding of the welding scheduled regions with power supply state detection means; and determining that the supply state of the power is faulty based on an output signal from the power supply state detection means. In this case, factors degrading the welding quality can be specified even easier by monitoring the power supply state.

The method preferably further includes a step of stopping the laser beam irradiation when the output state of the laser beam and the state of environment during welding are determined to be faulty. Factors degrading the welding quality can be specified even easier by stopping the laser beam irradiation at the point in time in which the output state of the laser beam and the state of environment during welding are determined to be faulty.

The output signal is preferably a waveform pattern. Where the output signals are converted into waveform patterns, the output state of the laser beam and the state of environment during welding can be grasped visually.

### Effect of the Invention

With the method for forming a laser weld in accordance with the present invention, factors degrading the welding quality can be easily specified.

### Brief Description of the Drawings

Fig. 1 illustrates the configuration of a laser welding system for implementing the method for forming a laser weld in accordance with the present invention.
Fig. 2 shows the configuration of a conveying apparatus.
Fig. 3 shows an example of the waveform pattern generated by a gap amount determination unit.
Fig. 4 illustrates the configuration of an irradiation apparatus.
Fig. 5 shows an example of relationship between physical quantities detected by the output state detection sensor group, welding environment detection sensor group, power supply detection sensor, and gas pressure detection sensor and faults that can be detected on the basis of these physical quantities.
Fig. 6 shows an example of a waveform pattern of output signals from a laser output intensity detection sensor.
Fig. 7 shows an example of a waveform pattern of output signals from a plasma/plume light intensity detection sensor and processing temperature detection sensor.
Fig. 8 shows an example of a waveform pattern of output signals from a reflected light intensity detection sensor.
Fig. 9 shows an example of a waveform pattern of output signals from a power supply detection sensor.
Fig. 10 illustrates the operation of a scanning device when a strain amount in the vicinity of the weld is detected.
Fig. 11 illustrates the operation of a scanning device when a strain amount in the opposite site is detected.
Fig. 12 shows an example of a waveform pattern corresponding to the strain amount in the vicinity of the weld.
Fig. 13 shows another example of a waveform pattern corresponding to the strain amount in the vicinity of the weld.
Fig. 14 shows an example of a waveform pattern corresponding to the strain amount in the opposite site.
Fig. 15 shows another example of a waveform pattern corresponding to the strain amount in the opposite site.
Fig. 16 shows an example of information stored in a welding result storage unit.
Fig. 17 is a flowchart illustrating the operation of the laser welding system shown in Fig. 1.
Fig. 18 is a flowchart of the pre-welding step.
Fig. 19 is a flowchart of the in-welding step.
Fig. 20 is a flowchart of the after-welding step.

### Explanation of Reference Numerals

1 ... laser welding system, 41 ... work (second workpiece), 42 work (first workpiece), 62 to 66 ... waveform patterns, 204 ... output state detection sensor group (output state detection means), 205 ... welding environment detection sensor group (welding environment detection means), 206 ... power supply detection sensor (power supply state detection means), 207 ... gas pressure detection sensor (gas supply state detection means), R ... welding scheduled region, W ... weld.

### Best Mode for Carrying out the Invention

The preferred embodiments of the method for forming a laser weld in accordance with the present invention will be described below in greater detail.

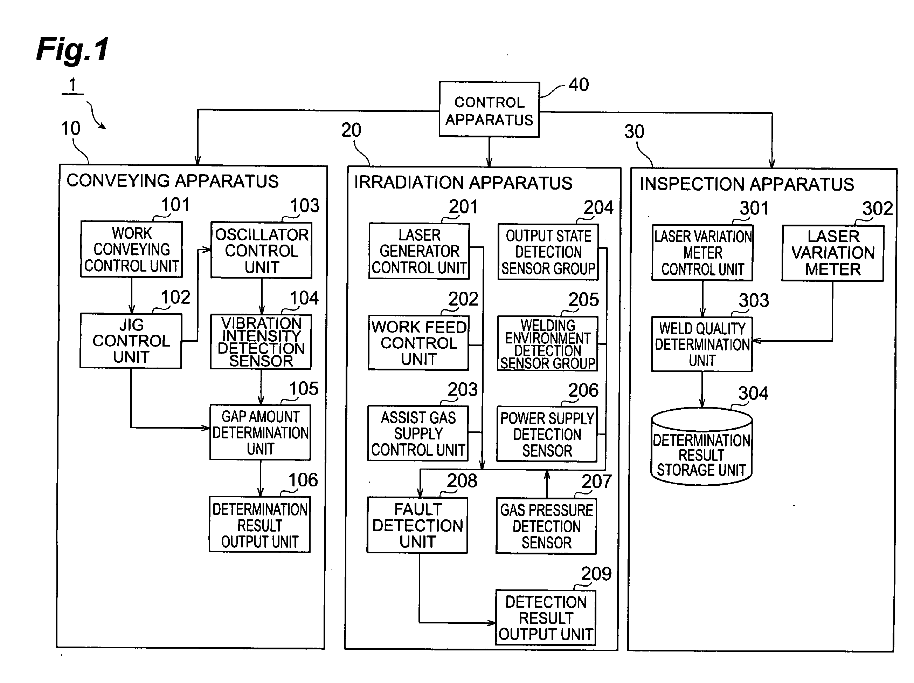

Fig. 1 is a structural diagram illustrating an embodiment of a laser welding system that realizes the method for forming a laser weld in accordance with the present invention. As shown in Fig. 1, a laser welding system 1 is configured as a system for lap welding an external panel and a skeleton member (both are referred to hereinbelow as "works") used in a body of a railroad car. The system includes a conveying apparatus 10 that brings welding scheduled regions of the works into contact with each other, an irradiation apparatus 20 that irradiates a laser beam toward the welding scheduled regions, and an inspection apparatus 30 that inspects welding quality of the weld obtained. The conveying apparatus 10, irradiation apparatus 20, and inspection apparatus 30 are each connected to a high-level control apparatus 40 that controls the entire system and automatically executes each processing from the pre-welding step, in-welding step, and after-welding step according to the operation indication information outputted from the control apparatus 40.

The conveying apparatus 10 has a work conveying control unit 101, a jig control unit 102, an oscillator control unit 103, a vibration intensity detection sensor 104, a gap amount determination unit 105, and a determination result output unit 106 as the functional constituent elements.

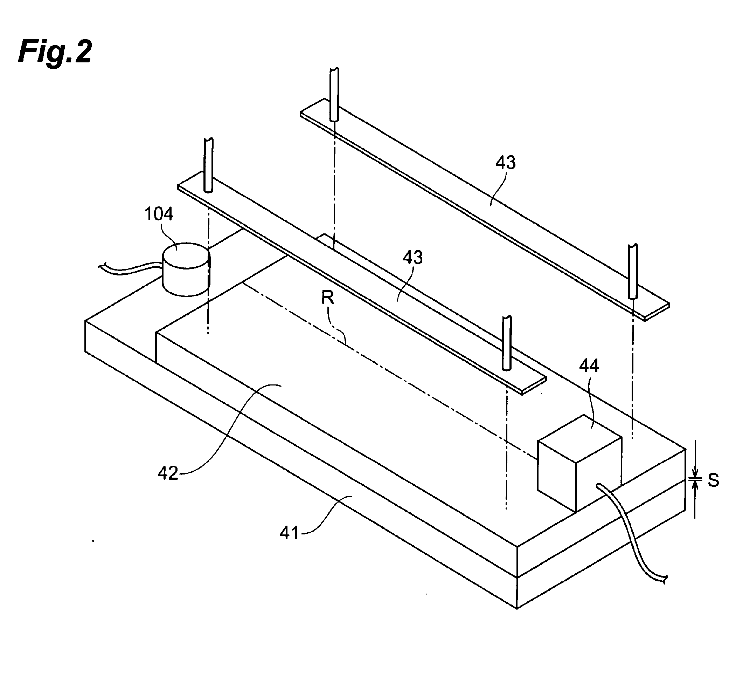

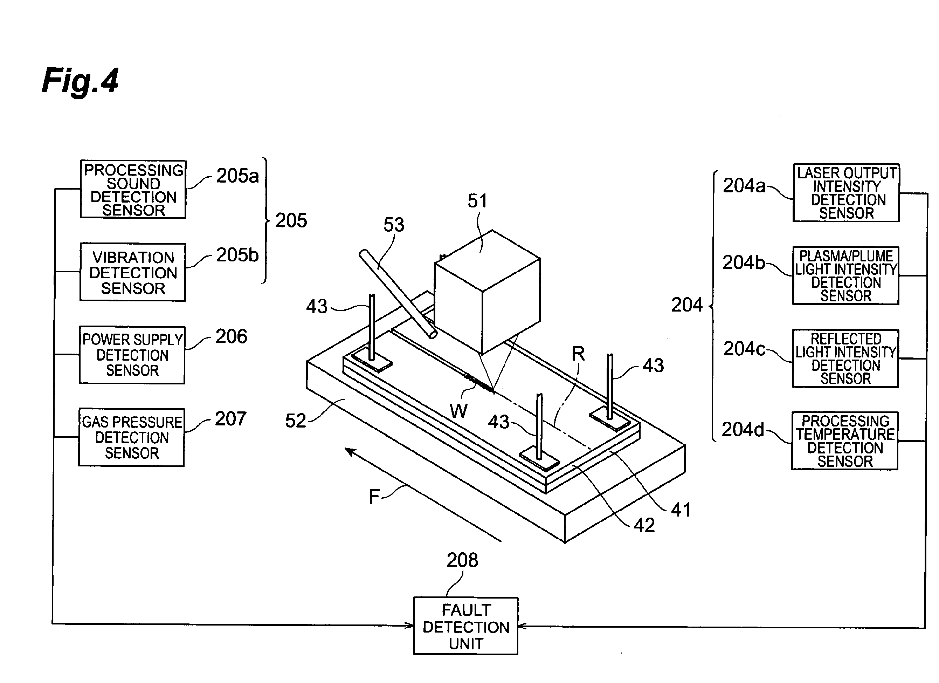

The work conveying control unit 101 is a unit that controls the operation of a conveying arm (not shown in the figure) that conveys a work. The work conveying control unit 101 starts controlling the conveying arm upon receiving start indication information from the control apparatus 40, this information indicating the conveying start of the work. As shown in Fig. 2, a work (first workpiece) 42 is placed on the upper surface of another work (second workpiece) 41 that has been placed on a feed apparatus 52 (see Fig. 4) of the irradiation apparatus 20, and welding scheduled regions R are brought into contact with each other. Once the conveying of the works 41, 42 is completed, the work conveying control unit 101 outputs start indication information to the jig control unit 102, this information indicating the operation start of a pressure application jig 43.

The jig control unit 102 is a unit that control the operation of the pressure application jig 43 for fixing the works 41, 42. Upon receiving start indication information from the work conveying control unit 101, the jig control unit 102 lowers the elongated pressure application jigs 43 from above the work 42 and applies pressure to edge portions of the works 41, 42, as shown in Fig. 2. As a result, the works 41, 42 are brought into more intimate contact with each other in the vicinity of the welding scheduled region R. After the pressure application jig 43 has been lowered, the jig control unit 102 outputs start indication information that indicates operation start to the oscillator control unit 103 and gap amount determination unit 105.

The oscillator control unit 103 is a unit that controls an oscillator 44 that is used for detecting a gap amount S between the works 41, 42. The oscillator 44 is disposed, for example, at one end of the upper surface of the work 42, as shown in Fig. 2. Upon receiving start indication information from the jig control unit 102, the oscillator control unit 103 causes the oscillator 44 to generate an elastic wave having a frequency component within an ultrasound range (several tens of kHz to several kHz).

The vibration intensity detection sensor 104 is a unit that detects the vibration intensity of the elastic wave generated by the oscillator 44. The vibration intensity detection sensor 104 is disposed, for example, on the upper surface of the work 41 opposite the oscillator 44, as shown in Fig. 2, and outputs an output signal corresponding to the vibration intensity of the elastic wave that has propagated from the work 42 to the work 41 to the gap amount determination unit 105.

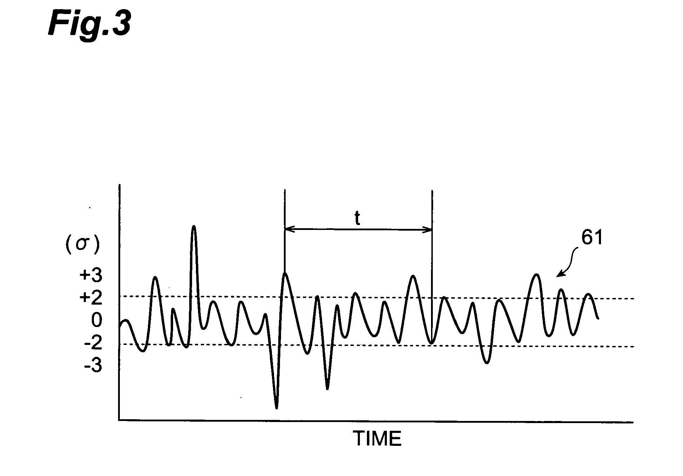

The gap amount determination unit 105 is a unit that determines the gap amount S between the works 41, 42. Upon receiving start indication information from the jig control unit 102, the gap amount determination unit 105 starts acquiring output signals from the vibration intensity detection sensor 104 and produces a wave pattern of the output signal against the time axis. Fig. 3 shows an example of the waveform pattern generated by the gap amount determination unit 105. In the example shown in Fig. 3, the time is plotted against the abscissa, and the value obtained by normalizing the intensity of the output signal is plotted against the ordinate. The wave pattern 61 is inversely proportional to the gap amount S between the works 41, 42. The normalization as referred to herein is a process of determining a frequency of each class (+3σ, +2σ, 0...) determined in advance on the basis of the average value and standard deviation of the output signal intensity.

The gap amount determination unit 105 integrates the number of times the wave pattern 61 exceeded the normalized value +2σ within the predetermined interval t. When the integrated number of times exceeds a predetermined number of times (for example, 10) that has been set in advance, it is determined that the gap amount S between the works 41, 42 is normal, and the integrated number of times is less than the predetermined number of times, it is determined that the gap amount S between' the works 41, 42 is faulty. The gap amount determination unit 105 then produces determination result information that indicates the determination results relating to the space amount S and outputs this information to the determination result output unit 106.
The determination result output unit 106 sends the received determination result information to the control apparatus 40.

The irradiation apparatus 20 will be explained below. As shown in Fig. 1, the irradiation apparatus 20 has a laser generator control unit 201, a work feed control unit 202, an assist gas supply control unit 203, an output state detection sensor group 204, an operation environment detection sensor group 205, a power supply detection sensor 206, a gas pressure detection sensor 207, an fault detection unit 208, and a detection result output unit 209 as functional constituent elements.

The laser generator control unit 201 is a unit that controls the operation of a laser device 51 for welding that irradiates the welding scheduled region R of the works 41, 42. As shown in Fig. 4, the laser device 51 is disposed above the works 41, 42 and uses, for example, an YAG laser with a wavelength of 1.06 µm and an output of about 4.0 kW. Upon receiving start indication information indicating the irradiation start with a laser beam from the control apparatus 40, the laser generator control unit 201 irradiates a laser beam within a predetermined interval from the laser device 51 onto the welding scheduled region R.

The work feed control unit 202 is a unit that controls the operation of a feed device 52 serving to scan the irradiation position of the laser beam on the works 41, 42. Upon receiving start indication information that indicates the scanning start from the control apparatus 40, the work feed control unit 202 scans the feed device 52 at a constant speed in the direction of arrow F. As a result, the irradiation position of the laser beam moves along the welding scheduled region R of the works 41, 42 and a weld W is successively formed in the welding scheduled region R.

The assist gas supply control unit 203 is a unit that controls the supply amount of assist gas from a gas supply device (not shown in the figure). Upon receiving start indication information that indicates the supply start from the control apparatus 40, the assist gas supply control unit 203 supplies the assist gas to the irradiation position of the laser beam at a predetermined supply amount. Helium gas or argon gas is used as the assist gas with the object of preventing oxidation and preventing sputtering of the works 41, 42. As shown in Fig. 4, the assist gas is supplied from a distal end of a supply nozzle 53 of the gas supply device that is inclined at about 45 degrees with respect to the works 41, 42 toward the irradiation position of the laser beam. The laser generator control unit 201, work feed control unit 202, and assist gas supply control unit 203 output the respective start indication information that indicates the operation start to the fault detection unit 208.

The output state detection sensor group 204 is a unit that detects variations in physical quantities of the output state of the laser beam. More specifically, as shown in Fig. 4, the output state detection sensor group 204 is configured by a laser output intensity detection sensor 204a, a plasma/plume light intensity detection sensor 204b, a reflected light intensity detection sensor 204c, and a processing temperature detection sensor 204d.

The laser output intensity detection sensor 204a is a photosensor that detects the light intensity of the laser beam that irradiates the works 41, 42. The laser output intensity detection sensor 204a is disposed in the vicinity of the irradiation position of the laser beam and outputs an output signal corresponding to the intensity of light of the same wavelength as the laser beam to the fault detection unit 208. The plasma/plume light intensity detection sensor 204b is a photosensor that detects the light intensity of plasma and plume generated on the surface of works 41, 42 by the irradiation with the laser beam. The plasma/plume light intensity detection sensor 204b is disposed in the vicinity of the irradiation position of the laser beam similarly to the laser output intensity detection sensor 204a and outputs an output signal corresponding to the intensity of light with a wavelength about 300 nm to about 800 nm, which is different from the wavelength of the laser beam. The plasma/plume light intensity detection sensor 204b outputs an output signal corresponding to the light intensity of plasma and an output signal corresponding to the light intensity of plume to the fault detection unit 208. The output signal corresponding to the light intensity of plasma and the output signal corresponding to the light intensity of plume may be together outputted to the fault detection unit 208, or they may be outputted to the fault detection unit 208 upon separation by a band-pass filter or the like.

The reflected light intensity detection sensor 204c is a photosensor that detects the light intensity of the laser beam reflected by the surface of the works 41, 42. The reflected light intensity detection sensor 204c is disposed in the vicinity of the emission end of the laser beam in the laser device 51 and outputs an output signal corresponding to the intensity of light with the same wavelength as that of the laser beam to the fault detection unit 208. The processing temperature detection sensor 204d is a photosensor for detecting the temperature in the laser irradiation position. The processing temperature detection sensor 204d is disposed in the vicinity of the irradiation position of the laser beam, similarly to the laser output intensity detection sensor 204a, and outputs an output signal corresponding to the light intensity of the light in an infrared region, which is outside the wavelength of the laser beam, to the fault detection unit 208.

The welding environment detection sensor group 205 is a unit that detects variations in physical quantities of the state of environment during welding. More specifically, as shown in Fig. 4, the welding environment detection sensor group 205 is configured by a processing sound detection sensor 205a and a vibration detection sensor 205b.

The processing sound detection sensor 205a is a directional microphone that detects sound generated at the surface of the works 41, 42 in the irradiation position of the laser beam. The processing sound detection sensor 205a incorporates a band-pass filter (not shown in the figure) that has a frequency band of about 20 Hz to about 20 kHz and outputs an output signal corresponding to the height of the sound in this frequency range to the fault detection unit 208. The vibration detection sensor 205b is an acceleration sensor that detects the size of vibrations in the pressure application jig 43 that fixes the works 41, 42. The vibration detection sensor 205b is attached, for example, to the axial portion of the pressure application jig 43 and outputs an output signal corresponding to acceleration in the XYZ directions in the pressure application jig 43 to the fault detection unit 208.

The power supply detection sensor 206 is provided at the laser device 51, feed device 52, and gas supply device and is a power meter that detects the amount of power supplied to each device. The power supply detection sensor 206 outputs an output signal corresponding to the detected power amount to the fault detection unit 208. The gas pressure detection sensor 207 is a pressure sensor for detecting a pressure of assist gas supplied from the gas supply device to the welding scheduled region R. The gas pressure detection sensor 207 outputs an output signal corresponding to the gas pressure to the fault detection unit 208.

The fault detection unit 208 is a unit that determines the presence or absence of fault in the output state of the laser beam, state of environment during welding, power supply, and assist gas pressure. Upon receiving start indication information from the laser generator control unit 201, work feed control unit 202, and assist gas supply control unit 203, the fault detection unit 208 starts acquiring output signals from the output state detection sensor group 204, welding environment detection sensor group 205, power supply detection sensor 206, and gas pressure detection sensor 207, and produces a waveform pattern of each output signal against a time axis.

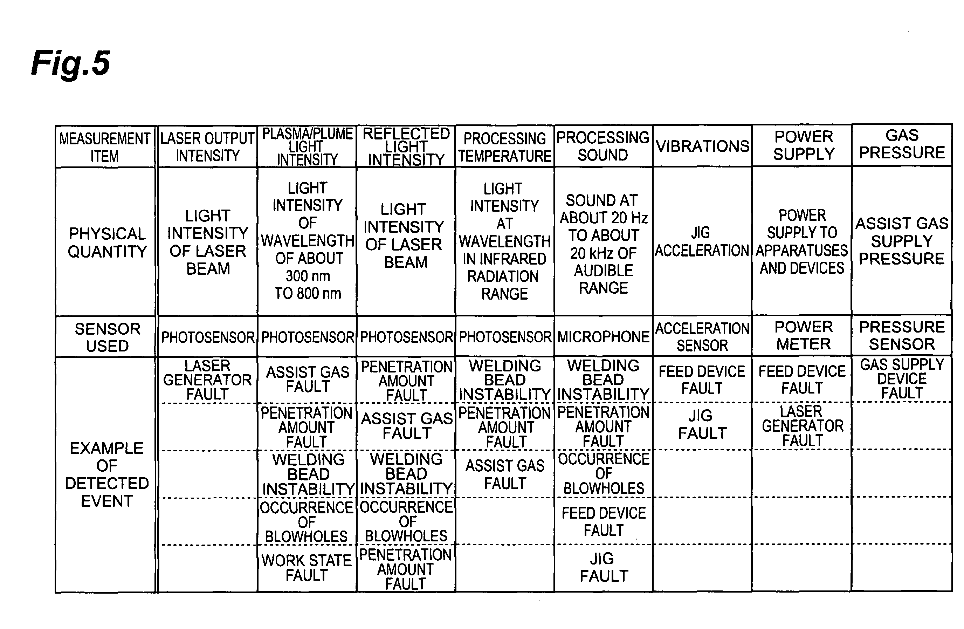

Fig. 5 shows an example of relationship between the physical quantities detected by the output state detection sensor group 204, welding environment detection sensor group 205, power supply detection sensor 206, and gas pressure detection sensor 207 and faults that can be detected by the physical quantities. As shown in Fig. 5, when a laser output intensity is faulty, faults associated the laser device 51 can be detected. When light intensity and reflected light intensity of plasma and plume are faulty, various faults associated with the welding bead, penetration amount, assist gas, blowhole occurrence, and work state can be detected. When the processing temperature is faulty, various faults associated with the welding bead, penetration amount, and assist gas can be detected.

When the processing sound is faulty, various faults associated with the welding bead, penetration amount, blowholes, feed device 52, and pressure application jig 43 can be detected. When vibrations are faulty, faults associated with the feed device 52 and pressure application jig 43 can be detected. When power supply is faulty, faults associated with feed device 52 and laser device 51 can be detected. When gas pressure is faulty, faults associated with the gas supply device can be detected.

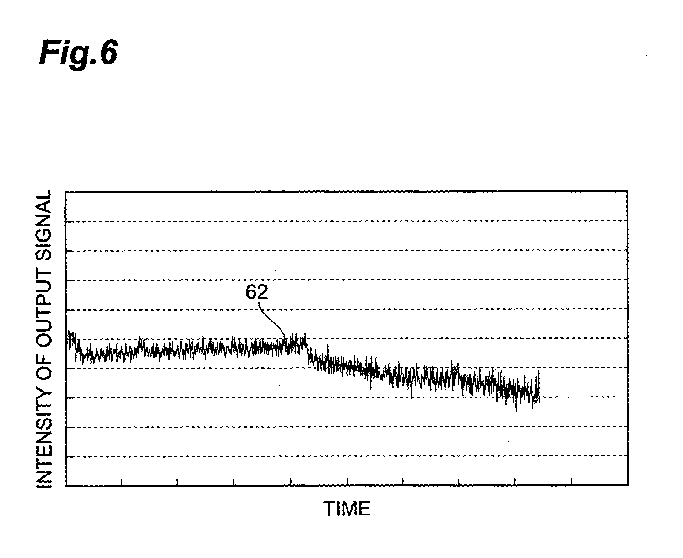

Fig. 6 to Fig. 9 show examples of waveform patterns generated by the fault detection unit 208. In each figure, the time is plotted against the abscissa, and the intensity of the output signal is plotted against the ordinate. Fig. 6 shows an example of a waveform pattern of output signals from the laser output intensity detection sensor 204a. In the example shown in Fig. 6, the fault detection unit 208 monitors a waveform pattern 62 of laser output intensity. When the laser output intensity decreased to less than 90% the initial value, it is determined that the laser device 51 operates faultily.

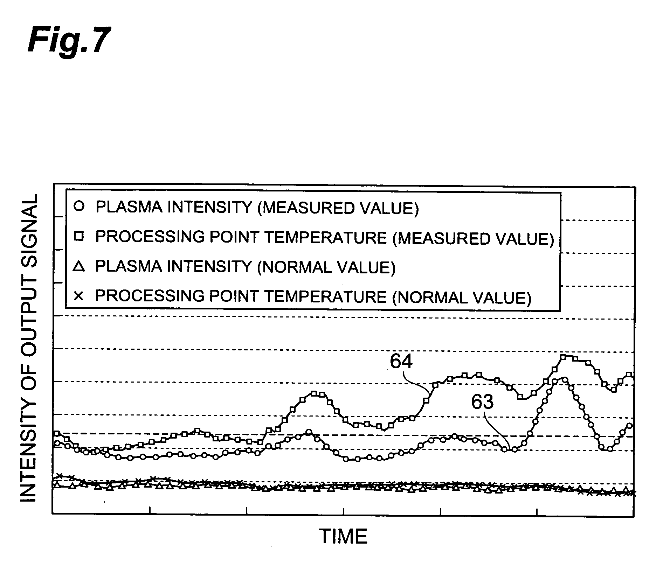

Fig. 7 shows an example of a waveform pattern of output signals from the plasma/plume light intensity detection sensor 204b and processing temperature detection sensor 204d. In the example shown in Fig. 7, a waveform pattern 63 of light intensity of plasma and plume and a waveform pattern 64 of processing temperature are subjected to respective smoothing processing, for example, by taking motion average values for every 100 data points. The fault detection unit 208 monitors the waveform patterns 63, 64 and determines that the assist gas component is faulty when both the light intensity of plasma and plume and the processing temperature exceed twofold normal values.

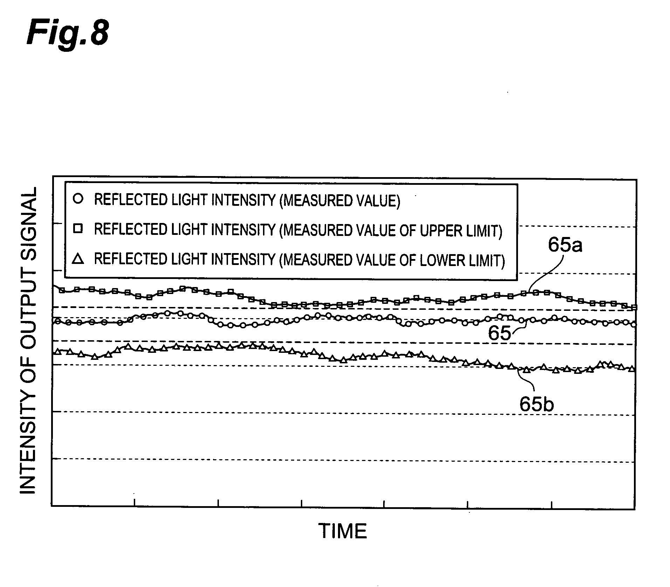

Fig. 8 shows an example of a waveform pattern of output signals from the reflected light intensity detection sensor 204c. In the example shown in Fig. 8, a waveform pattern 65 of reflected light intensity is subjected to smoothing processing, for example, by taking motion average values for every 50 data points. Further, in order to establish a threshold of the waveform pattern 65, a waveform pattern 65a of an upper limit measurement value and a waveform pattern 65b of a lower limit measurement value of reflected light intensity are measured in advance, and the minimum value of the waveform pattern 65a and the maximum value of the waveform pattern 65b are set respectively as the upper limit threshold and lower limit threshold of the waveform pattern 65 of reflected light intensity. When the waveform pattern 65 exceeds the upper limit threshold, the loss of laser beam in the irradiation positions is assumed to be large and the penetration amount is taken to be insufficient. When the waveform pattern 65 is below the lower limit threshold, the loss of laser beam is assumed to be too small and the penetration amount is taken to be excessive. The fault detection unit 208 monitors the waveform pattern 65 and determines that the penetration amount is faulty when the reflected light intensity is below the lower limit threshold or higher than the upper limit threshold that are set in advance.

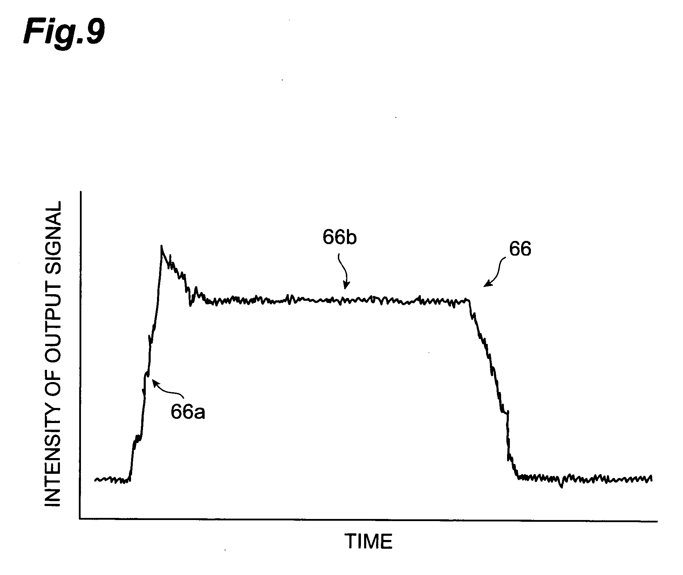

Fig. 9 shows an example of a waveform pattern of output signals from the power supply detection sensor 206 of the feed device 52. In the example shown in Fig. 9, a waveform pattern 66 of supplied power amount is subjected to smoothing processing, for example, by taking motion average values for every 100 data points. The fault detection unit 208 determines that the feed device 52 is faulty when, for example, the inclination of a rising portion 66a of the waveform pattern 66 is equal to or lower than a predetermined threshold or when a data point exceeding a predetermined threshold is detected in a stationary portion 66b of the waveform pattern 66. When a fault is associated with the output state of the laser beam, state of environment during welding, power supply, and assist gas pressure, the fault detection unit 208 generates determination result information that indicates that the fault is present and also the item that is faulty and the outputs the generated information to the determination result output unit 209. The determination result output unit 209 sends the received determination result information to the control apparatus 40.

The inspection apparatus 30 will be described below. As shown in Fig. 1, the inspection apparatus 30 has a laser variation meter control unit 301, a laser variation meter (first strain amount detection means, second strain amount determination means) 302, a welding quality determination unit 303, and a determination result storage unit 304.

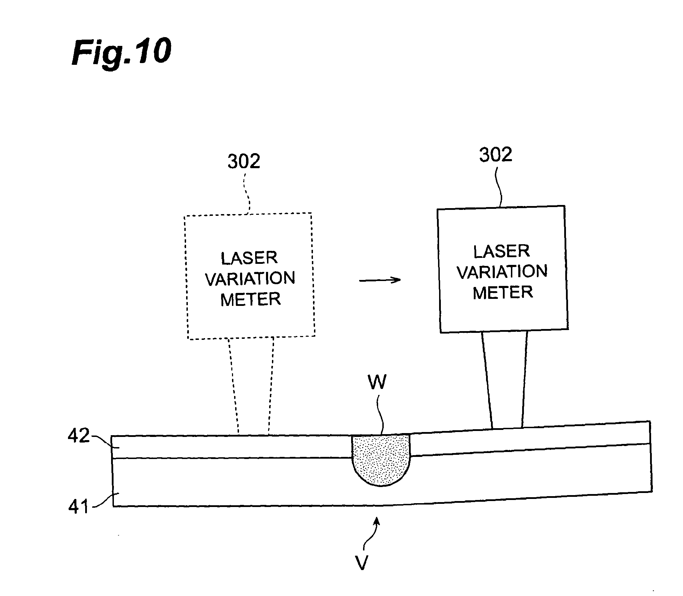

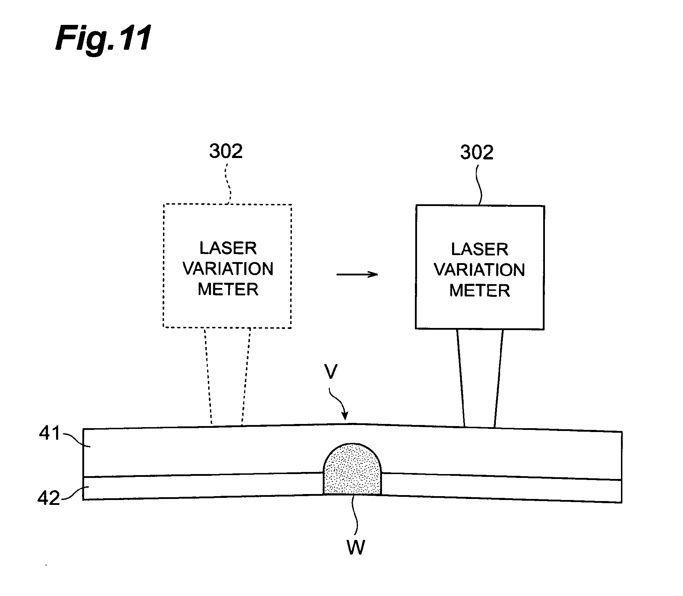

The laser variation meter control unit 301 is a unit that controls the operation of the laser variation meter 302 serving to detect the strain amount of the works 41, 42. Upon receiving a start indication information indicating the start of welding quality inspection from the control apparatus 40, the laser variation meter control unit 301 outputs the start indication information to the welding quality determination unit 303. Then, the laser variation meter control unit 301 causes the emission of a laser beam for measurement from the laser variation meter 302 and scans the laser variation meter 302 so as to cross the weld W at the surface of the work 42 where the weld W is exposed, as shown in Fig. 10. In addition, after the works 41, 42 have been turned upside down, for example, by a conveying arm (not shown in the figure) of the conveying apparatus 10, the laser variation meter control unit 301 scans the laser variation meter 302 so as to cross the opposite site V of the weld W at the surface of the work 41 where the weld W is not exposed, as shown in Fig. 11. The laser variation meter 302 outputs an output signal corresponding to the detected strain amount to the welding quality determination unit 303.

The welding quality determination unit 303 is a unit that determines the welding quality of the weld W in the works 41, 42 on the basis of the output signal from the laser variation meter 302. The undercut amount and underfill amount of the weld W and the amount of convexities and concavities and the breaking amount of the opposite site V of the weld W are set as the inspection items of welding quality. Upon receiving a start indication information from the laser variation meter control unit 301, the welding quality determination unit 303 starts acquiring output signals from the laser variation meter 302 and produces a waveform pattern relating to the scanning positions of the output signals.

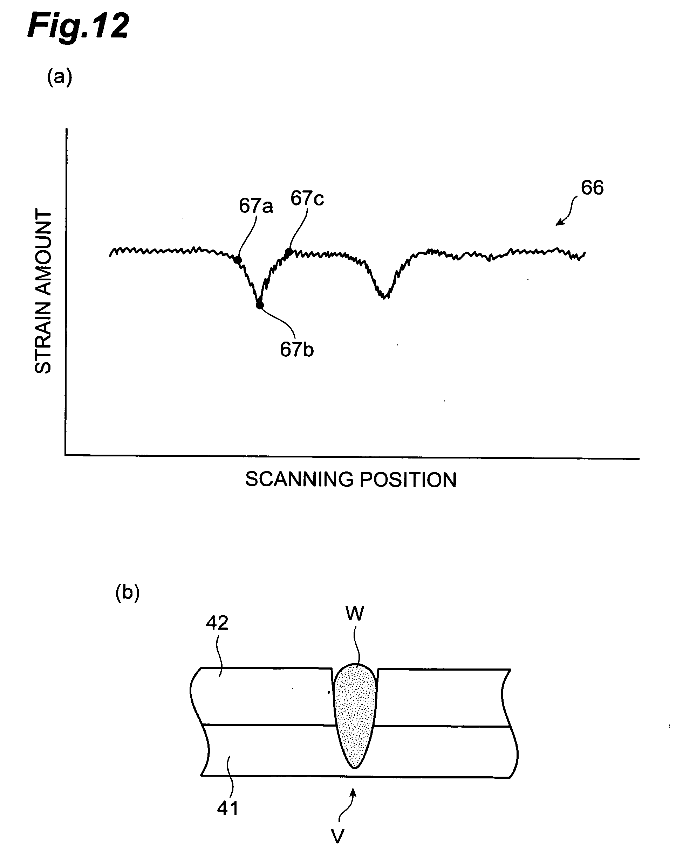

Fig. 12 to Fig. 15 illustrate an example of a waveform pattern of output signals from the laser variation meter 302. In the figures, the scanning position is plotted against the abscissa, and the strain amount found point of inflection from the intensity of output signal is plotted against the ordinate. Each waveform pattern is subjected to smoothing processing, for example, by taking motion average values for every 100 data points. (a) of Fig. 12 shows an example of a waveform pattern corresponding to the strain amount in the vicinity of weld W in the work 42. In this case, the welding quality determination unit 303 recognizes that an undercut has occurred in the weld W, for example, by detecting three points 67a, 67b, 67c of extremum change in which the sign of inclination of the waveform pattern 67 changes. The undercut as referred to herein is a defect such that a concave portion is formed around the weld W as shown in (b) of Fig. 12. The welding quality determination unit 303 calculates, for example, the difference between a strain amount in a point 67a of extremum change (or point 67c of extremum change) and a strain amount in a point 67b of extremum change as an undercut amount and determines that welding quality of the weld W is faulty when this difference exceeds a threshold set in advance.

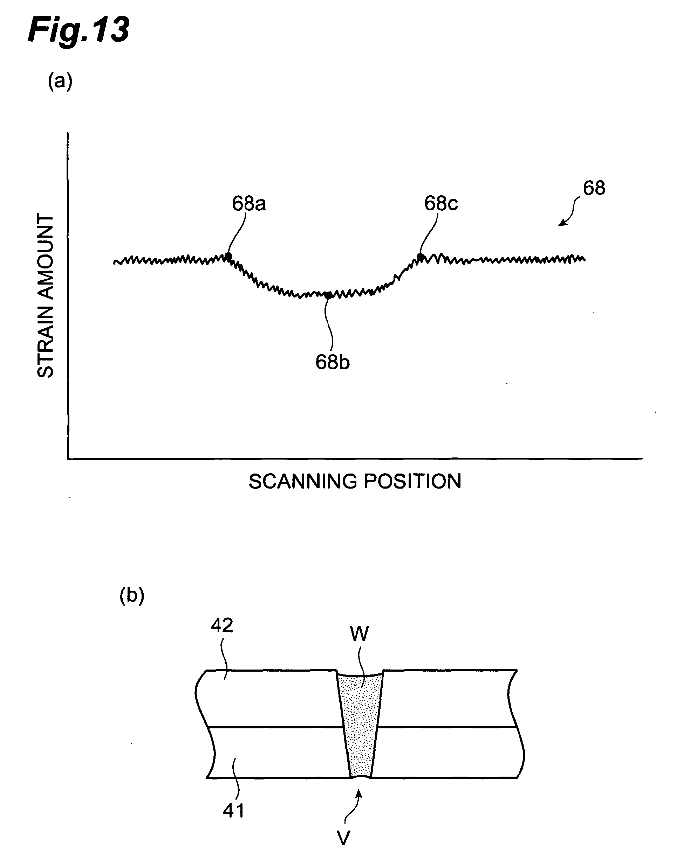

(a) of Fig. 13 shows another example of the waveform pattern corresponding to the strain amount in the vicinity of weld W in the work 42. In this case, the welding quality determination unit 303 detects three points 68a, 68b, 68c of extremum change of the waveform pattern 68 in the same manner as in the case shown in Fig. 12, but recognizes that an underfill has occurred in the weld W when the spacing of scanning positions from the point 68a of extremum change to the point 68c of extremum change is equal to or larger than a predetermined width. The underfill as referred to herein is a defect such that a peak portion of the weld W is formed in a concave shape, as shown in (b) of Fig. 13. The welding quality determination unit 303 then calculates, for example, the difference between a strain amount in a point 68a of extremum change (or point 68c of extremum change) and a strain amount in a point 68b of extremum change as an underfill amount and determines that welding quality of the weld W is faulty when this difference exceeds a threshold set in advance.

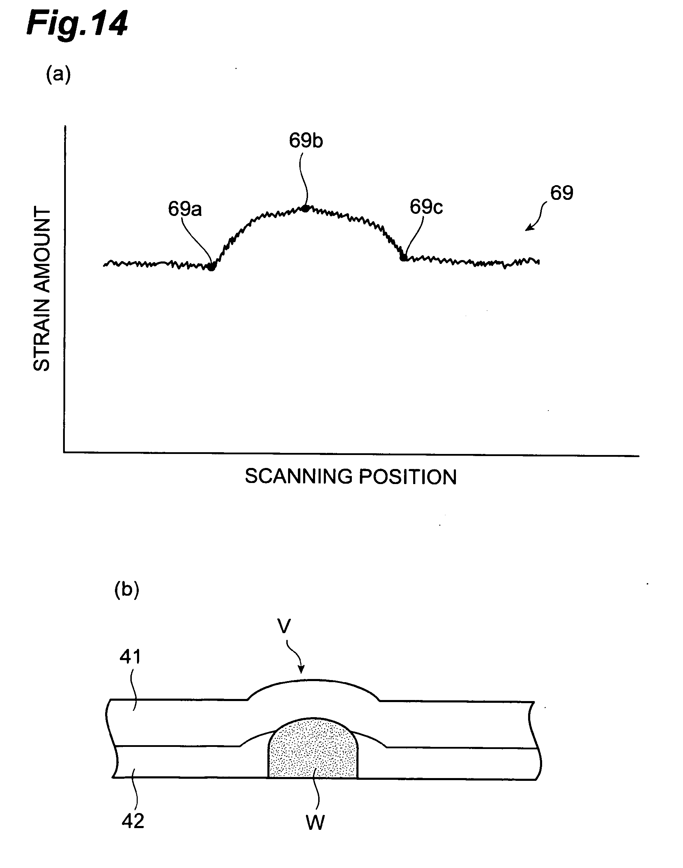

(a) of Fig. 14 shows an example of a waveform pattern corresponding to the strain amount in the opposite site V of the weld W in the work 41. The welding quality determination unit 303 recognizes peaks and valleys in the works 41, 42 that occur in the opposite site V, as shown in (b) of Fig. 14, by detecting three points 69a, 69b, 69c of extremum change of the waveform pattern 69. The welding quality determination unit 303 then calculates, for example, the difference between a strain amount in a point 69a of extremum change (or point 69c of extremum change) and a strain amount in a point 69b of extremum change as a peak-valley amount and determines that welding quality of the weld W is faulty when this difference exceeds a threshold set in advance.

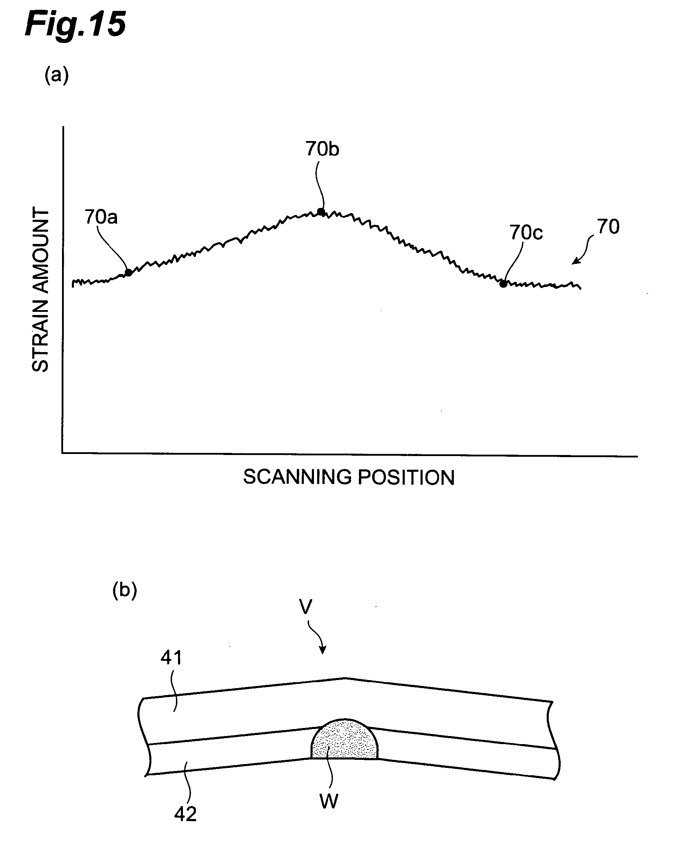

(a) of Fig. 15 illustrates another example of a waveform pattern corresponding to the strain amount in the opposite site V of the weld W in the work 41. Similarly to the case illustrated by Fig. 14, three points 70a, 70b, 79c of extremum change of the waveform pattern 70 are detected, and the occurrence of breaking in the works 41, 42 is recognized, as shown in (b) of Fig. 15 when the spacing of scanning positions from the point 70a of extremum change to the point 70c of extremum change is equal to or larger than a predetermined width. The welding quality determination unit 303 calculates, for example, the difference between a strain amount in the point 70a of extremum change (or point 70c of extremum change) and a strain amount in the point 70b of extremum change as a breaking amount and determines that welding quality of the weld W is faulty when this difference exceeds a threshold set in advance. The welding quality determination unit 303 then sends determination result information indicating the determination results relating to the undercut amount, underfill amount, peak-valley amount, and breaking amount to the determination result storage unit 304.

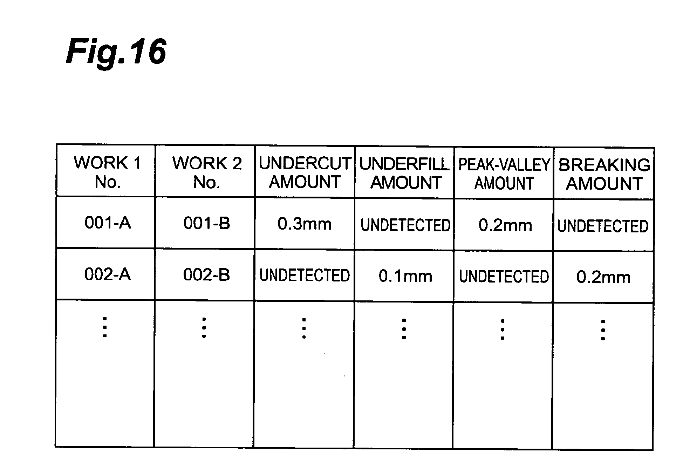

The determination result storage unit 304 is a unit that stores the determination result information outputted from the welding quality determination unit 303 correspondingly to the product numbers of the works 41, 42. Fig. 16 shows an example of information stored in the determination result storage unit 304. In the example shown in Fig. 16, the undercut amount "0.3 mm", underfill amount "Undetected", peak-valley amount "0.2 mm", and breaking amount "Undetected" are stored correspondingly to the product numbers "001-A", "001-B" of the works 41, 42. The undercut amount "Undetected ", underfill amount "0.1 mm", peak-valley amount "Undetected", and breaking amount "0.2 mm" are stored correspondingly to the product numbers "002-A", "002-B" of the works 41, 42.

Finally, the control apparatus 40 will be explained. The control apparatus 40 is physically a computer system including a CPU, a memory, a communication interface, a storage unit such as a hard disk, and a display unit such as a display. The control apparatus 40 sends a start indication information that indicates the work conveying start to the conveying apparatus 10 upon receiving a predetermined operation from the user of the laser welding system 1. When the control apparatus 40 receives determination result information indicating that the gap amount S is normal from the conveying apparatus 10 in the pre-welding step, the control apparatus sends start indication information indicating the irradiation start of the laser beam to the irradiation apparatus 20, and when determination result information indicating that the gap amount S is faulty is received, the control apparatus sends irradiation prohibition information that prohibits the irradiation start of the laser beam to the irradiation apparatus 20.

Further, when the control apparatus 40 does not receive determination result information indicating that there is a fault in the output state of the laser beam, state of environment during welding, power supply, and assist gas pressure and also indicating the faulty item from the irradiation apparatus 20 in the in-welding step, the control apparatus sends start indication information indicating the inspection start of welding quality to the inspection apparatus 30. When the determination result information is received, the control apparatus sends operation stop information that indicates the stop of operation to the irradiation apparatus 20 and also sends inspection prohibition information that prohibits the start of welding state inspection to the inspection apparatus.

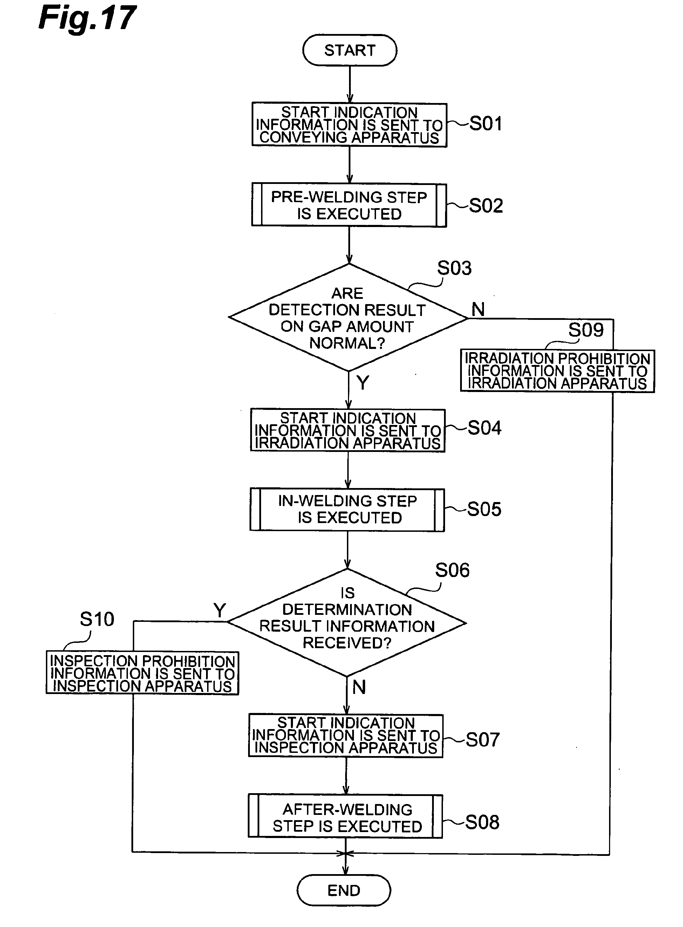

The operation of the laser welding system 1 having the above-described configuration will be described below with reference to flowcharts shown in Fig. 17 to Fig. 20.

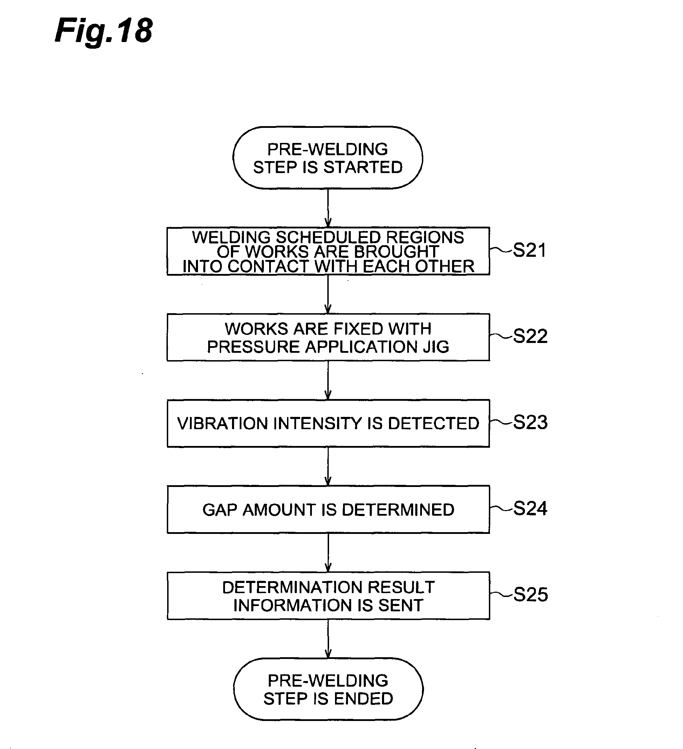

First, where a predetermined operation is performed by the user, start indication information is sent from the control apparatus 40 to the conveying apparatus 10 (step S01), and the pre-welding step is executed by the conveying apparatus 10 (step S02). In the pre-welding step, as shown in Fig. 18, first, the works 41, 42 are stacked by a conveying arm (not shown in the figure, and the welding scheduled regions R of the works 41, 42 are brought into contact with each other (step S21). Then, a pressure is applied around the welding scheduled regions R by the pressure application 43 and the works 41, 42 are fixed (step S22).

When the works 41, 42 are fixed, an elastic wave of a predetermined frequency is generated from the oscillator 44. The elastic wave that propagated through the works 41, 42 that are brought into contact at the welding scheduled regions R is detected by the vibration intensity detection sensor 104, and the vibration intensity detection sensor 104 outputs an output signal corresponding to a signal intensity of the detected elastic wave (step S23). The gap amount S between the works 41, 42 is then determined based on the waveform pattern of the output signal (step S24), the determination result information is sent to the control apparatus 40, and the pre-welding step is ended (step S25).

Once the pre-welding step is ended, the determination of the contents of the determination result information received from the conveying apparatus 10 is performed in the control apparatus 40, as shown in Fig. 17 (step S03). When the gap amount S is normal, start indication information is sent from the control apparatus 40 to the irradiation apparatus 20 (step S04), and the in-welding step is executed by the irradiation apparatus 20 (step S05). On the other hand, when the gap amount S is faulty, irradiation prohibition information is sent from the control apparatus 40 to the irradiation apparatus 20 (step S09), and the processing is stopped without executing the in-welding step.

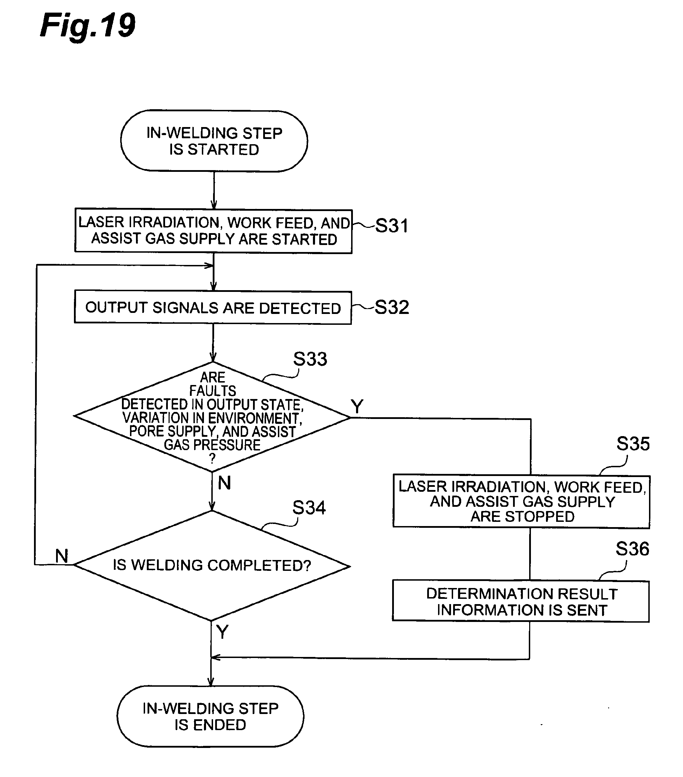

In the in-welding step, as shown in Fig. 19, first, laser irradiation, work feed, and assist gas supply are started and the weld W is successively formed in the works 41, 42 along the welding scheduled regions R (step S31). Further, while the welding is being performed, the detection of physical quantities is performed by the output state detection sensor group 204, welding environment detection sensor group 205, power supply detection sensor 206, and gas pressure detection sensor 207 (step S32), and the presence or absence of faults in the output state of the laser beam, state of environment during welding, power supply, and assist gas pressure is determined based on the waveform patterns of output signals corresponding to the physical quantities (step S33).

When the output state of the laser beam, state of environment during welding, power supply, and assist gas pressure are determined to be normal, it is determined whether the welding is completed (step S34). Where the welding is completed, the processing ends, and where the welding is not completed, the processing of the above-described steps S32 to step S33 is repeated. When the output state of the laser beam, state of environment during welding, power supply, and assist gas pressure are determined to be faulty, the laser irradiation, work feed, and assist gas supply are immediately stopped by the control apparatus 40 (step S35). Determination result information is then sent from the irradiation apparatus 20 to the control apparatus 40 (step S36).

Once the in-welding step has ended, the control apparatus 40 determines whether the determination result information has been received from the irradiation apparatus 20, as shown in Fig. 17 (step S06). Where the determination result information has not been received, start indication information is sent from the control apparatus 40 to the inspection apparatus 30 (step S07), and the after-welding step is executed by the inspection apparatus 30 (step S08). On the other hand, when the determination result information has been received, inspection prohibition information is sent from the control apparatus 40 to the inspection apparatus 30 (step S10) and the processing ends without executing the after-welding step.

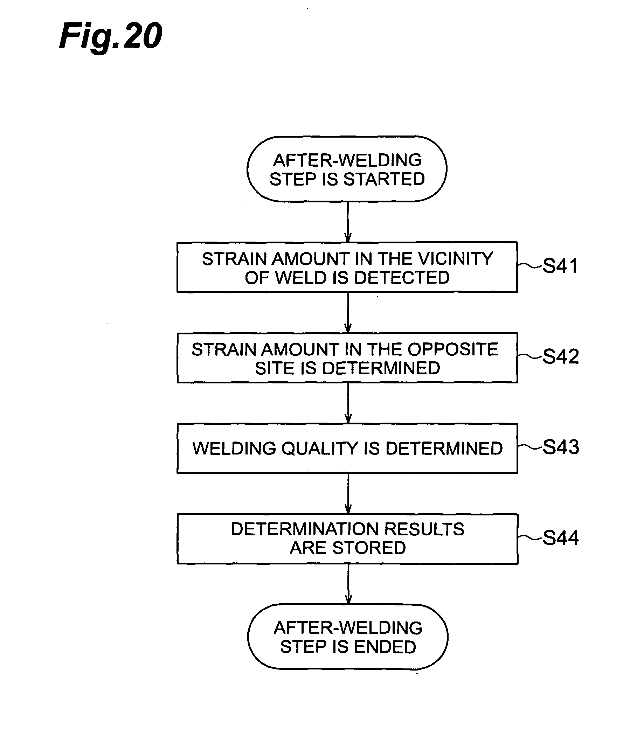

In the after-welding step, the determination of strain amount in the vicinity of the weld W exposed in the work 42 is performed by scanning the laser variation meter 302, as shown in Fig. 20 (step S41). Then, after the works 41, 42 are turned upside down, the strain amount in the opposite site V of the weld W in the work 41 is detected (step S42). Then, each item of welding quality of the works 41, 42, that is, undercut amount, underfill amount, peak-valley amount, and breaking amount is determined based on the waveform patterns of output signals corresponding to each strain amount (step S43). The determination results are stored in the determination result storage unit 304 correspondingly to the product number of works 41, 42 (step S44), and the after-welding step is ended.

As described hereinabove, with this method for forming a laser weld, variations in physical quantities of the output state of laser beam and state of environment during welding are detected by the output state detection sensor group 204 and welding environment detection sensor group 205 in the in-welding step. Then, waveform patterns of the output signals outputted from the sensor groups 204, 205 are monitored, and whether or not a fault is present in the entire laser welding system 1 including the laser device 51, work feed device 52, and assist gas supply device is determined based on whether or not the waveform pattern exceeds a threshold that has been set in advance. As a result, factors causing deterioration of welding quality can be easily specified even when problems such as decrease in yield and deterioration of parts of equipment with time have occurred.

Further, with this method for forming a laser weld, the supply state of the assist gas supplied to the welding scheduled region R during welding and the supply state of power supplied to the laser device 51, feed device 52, and gas supply device are monitored together in addition to monitoring the output state of laser beam and state of environment during welding. As a result, when a fault occurs in the laser welding system 1, factors causing deterioration of welding quality can be specified even easier. Furthermore, because the output signals are converted into waveform patterns when the states are monitored, each state can be grasped visually.

The present invention is not limited to the above-described embodiment. For example, the thresholds used for determining normality or fault of waveform patterns of output signals from the output state detection sensor group 204, welding environment detection sensor group 205, power supply detection sensor 206, and gas pressure sensor 207 can be changed appropriately based on the shape and thickness of works 41, 42, shape of the welding scheduled region R, and the like. Further, the power supply detection sensor 206 may detect not only the power supply to the laser device 51, feed device 52, and gas supply device, but also the total power supplied to these devices.

Further, after the gap amount S has been determined, the distance from the head of the laser device 51 to the works 41, 42 may be determined with distance measuring means of a contactless or contact type (not shown in the figure), and the presence or absence of a fault in the focusing position during laser irradiation and the feed device 52 may be monitored.

## Claims

1. A method for forming a laser weld, comprising a pre-welding step of bringing welding scheduled regions of a first workpiece and a second workpiece into contact with each other, an in-welding step of irradiating a laser beam along the welding scheduled regions, and an after-welding step of inspecting welding quality of a weld formed in the welding scheduled regions, wherein
the in-welding step comprises the steps of:
detecting variations in physical quantities of an output state of the laser beam during irradiation in the welding scheduled regions and a state of environment during welding with output state detection means and welding environment detection means; and
determining that the output state of the laser beam and the state of environment during welding are faulty on output signals from the output state detection means and welding environment detection means.

2. The method for forming a laser weld according to claim 1, further comprising the steps of:
detecting variations in physical quantities of a supply state of a gas supplied into the welding scheduled regions with gas supply state detection means; and
determining that the supply state of the gas is faulty based on an output signal from the gas supply state detection means.

3. The method for forming a laser weld according to claim 1, further comprising the steps of:
detecting variations in physical quantities of a supply state of power supplied during welding of the welding scheduled regions with power supply state detection means; and
determining that the supply state of the power is faulty based on an output signal from the power supply state detection means.

4. The method for forming a laser weld according to claim 1, further comprising a step of stopping the laser beam irradiation when the output state of the laser beam and the state of environment during welding are determined to be faulty.

5. The method for forming a laser weld according to claim 1, wherein the output signal is a waveform pattern.
